(19) Europäisches Patentamt
European Patent Office
Office européen des brevets

(11) **EP 4 468 794 A1**

(12) **EUROPEAN PATENT APPLICATION**

(43) Date of publication:
**27.11.2024 Bulletin 2024/48**

(21) Application number: **24175860.6**

(22) Date of filing: **14.05.2024**

(51) International Patent Classification (IPC):
**H04W 52/36** (2009.01)    **H04W 52/38** (2009.01)

(52) Cooperative Patent Classification (CPC):
**H04W 52/367; H04W 52/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 KR 20230065887**
**17.08.2023 KR 20230107919**

(71) Applicant: **Samsung Electronics Co., Ltd.**
**Suwon-si, Gyeonggi-do 16677 (KR)**

(72) Inventors:
• **LEE, Dongwook**
**16677 Suwon-si (KR)**
• **YU, Hyunseok**
**16677 Suwon-si (KR)**
• **LEE, Gangminh**
**16677 Suwon-si (KR)**
• **LEE, Jeongtaek**
**16677 Suwon-si (KR)**

(74) Representative: **Marks & Clerk LLP**
**15 Fetter Lane**
**London EC4A 1BW (GB)**

(54) **ELECTRONIC DEVICE FOR SETTING TRANSMIT POWER BASED ON TER VALUE**

(57)    An example electronic device includes a first antenna module, a first transmitter, a first communication processor, a second antenna module, a second transmitter, and a second communication processor. The first communication processor receives a state of the second communication processor, sets a first allocated total exposure ratio (TER) value based on a state of the first communication processor and the state of the second communication processor, sets transmission limit power of each antenna of a plurality of antennas included in the first antenna module based on the first allocated TER value, and sets transmit power of each antenna of the plurality of antennas included in the first antenna module based on the transmission limit power.

FIG. 2

**Description**

BACKGROUND

An electronic device may transmit a radio frequency (RF) signal through an antenna to communicate with other devices. Electromagnetic waves by an RF signal transmitted through an antenna may have harmful effects on the human body. In order to reduce the harmful effects of electromagnetic waves, public authorities regulate a total exposure ratio (TER) value measured when an electronic device transmits RF signals. Accordingly, when the electronic device transmits an RF signal, the TER value regulation condition is satisfied.

In this state, for an electronic device to satisfy the TER value regulation condition, the transmit power of an RF signal of an electronic device is reduced. The reduction of the transmit power may cause the reduction of the communication performance of an electronic device. Accordingly, there is a demand for the development of a method of satisfying the TER value regulation condition while minimizing the reduction of the communication performance of an electronic device.

SUMMARY

The present disclosure relates to electronic devices, including an electronic device which may provide optimal communication performance while satisfying a total exposure ratio (TER) value regulation condition.

In some implementations, an electronic device includes a first antenna module including a plurality of antennas, a first transmitter configured to transmit a signal through at least one of the plurality of antennas included in the first antenna module, a first communication processor configured to set transmit power of the first transmitter, a second antenna module including a plurality of antennas, a second transmitter configured to transmit a signal through at least one of the plurality of antennas included in the second antenna module, and a second communication processor configured to set transmit power of the second transmitter, wherein the first communication processor is further configured to receive a state of the second communication processor, set a first allocated TER value indicating a total exposure ratio (TER) value allocated to the first transmitter, based on a state of the first communication processor and the state of the second communication processor, set transmission limit power of each or at least one of the plurality of antennas included in the first antenna module, based on the first allocated TER value, and set transmit power of each or at least one of the plurality of antennas included in the first antenna module, based on the transmission limit power.

In some implementations, an electronic device includes a first antenna module including a plurality of antennas, a first transmitter configured to transmit a signal through at least one of the plurality of antennas included in the first antenna module, a first communication processor configured to set transmit power of the first transmitter, a second antenna module including a plurality of antennas, a second transmitter configured to transmit a signal through at least one of the plurality of antennas included in the second antenna module and a second communication processor configured to set transmit power of the second transmitter, wherein the first communication processor is further configured to receive a state of the second communication processor, set a first allocated TER value indicating a total exposure ratio (TER) value allocated to the first transmitter, based on a coupling coefficient indicating a correlation between exposure by the first antenna module and exposure by the second antenna module, a state of the first communication processor, and the state of the second communication processor, set transmission limit power of each or at least one of the plurality of antennas included in the first antenna module, based on the first allocated TER value, and set transmit power of each or at least one of the plurality of antennas included in the first antenna module, based on the transmission limit power.

In some implementations, an electronic device includes a main processor configured to control an overall operation of the electronic device, a first antenna module including a plurality of antennas, a first transmitter configured to transmit a signal through at least one of the plurality of antennas included in the first antenna module, a first communication processor configured to set transmit power of the first transmitter, a second antenna module including a plurality of antennas, a second transmitter configured to transmit a signal through at least one of the plurality of antennas included in the second antenna module, a second communication processor configured to set transmit power of the second transmitter and an inner bus connected between the first communication processor and the second communication processor and configured to transmit data between the first communication processor and the second communication processor, wherein the first communication processor is further configured to receive a state of the second communication processor through the main processor or the inner bus, set a first allocated TER value indicating a total exposure ratio (TER) value allocated to the first transmitter, based on a state of the first communication processor and the state of the second communication processor, set transmission limit power of each or at least one of the plurality of antennas included in the first antenna module, based on the first allocated TER value, and set transmit power of each or at least one of the plurality of antennas included in the first antenna module, based on the transmission limit power.

At least some of the above and other features of the disclosure are set out in the claims.

BRIEF DESCRIPTION OF THE DRAWINGS

Implementations of the present disclosure will be more clearly understood from the following detailed description taken in conjunction with the accompanying drawings.

FIG. 1 is a view showing an example of a wireless communication system including an electronic device.

FIG. 2 is a block diagram of an example of an electronic device.

FIG. 3 is a graph for describing an example of a method of measuring a TER value, which is performed by an electronic device.

FIG. 4 is a block diagram showing an example of a first communication processor of an electronic device.

FIG. 5 is a view showing an example of a method of setting a communication mode in an electronic device.

FIG. 6 is a table showing an example of a method of setting a first allocated total exposure ratio (TER) value and a second allocated TER value based on a communication mode in an electronic device.

FIG. 7 is a view showing another example of a method of setting a communication mode in an electronic device.

FIG. 8 is a table showing another example of a method of setting an allocated TER value based on a communication mode in an electronic device.

FIG. 9 is a view showing an example of an antenna index buffer and an example of a used power buffer of an electronic device.

FIG. 10 is a flowchart of an example of an operating method of an electronic device.

FIG. 11 is a flowchart of an example of a method of setting a first allocated TER value and a second allocated TER value in an electronic device.

FIG. 12 is a flowchart of an example of a method of setting transmission limit power in an electronic device.

FIG. 13 is a block diagram of an example user equipment.

DETAILED DESCRIPTION

Hereinafter, implementation of the disclosure are described below in detail with reference to the accompanying drawings.

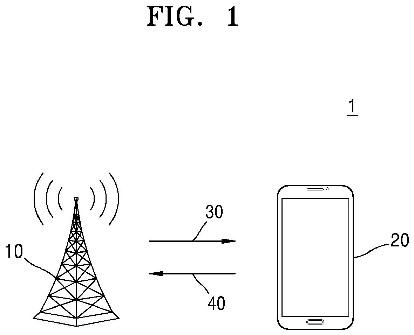

FIG. 1 is a view showing an example of a wireless communication system 1 including an electronic device.

Referring to FIG. 1, the wireless communication system 1 may include a base station 10 and an electronic device 20. The base station 10 and the electronic device 20 may communicate with each other through a downlink channel 30 and an uplink channel 40.

The base station 10 may be generally referred to as a fixed station that communicates with the electronic device 20 and other base stations, and may exchange data and control information by communicating with the electronic device 20 and the other base stations. The base station 10 may be referred to as a Node B, an evolved-Node B (eNB), a base transceiver system (BTS), an access point (AP), and the like.

The electronic device 20, as a device capable of performing wireless communication, may be fixed or mobile, and may be any one of various devices capable of transceiving data and control information by communicating with the base station 10. The electronic device 20 may be referred to as terminal equipment, a mobile station (MS), a mobile terminal (MT), a user terminal (UT), a subscribe station (SS), a wireless device, a handheld device, and the like.

A wireless communication network between the base station 10 and the electronic device 20 shares available network resources so as to support communication between multiple users. For example, in a wireless communication network, information may be transmitted in various methods, such as code division multiple access (CDMA), frequency division multiple access (FDMA), time division multiple access (TDMA), orthogonal frequency division multiple access (OFDMA), single carrier frequency division multiple access (SC-FDMA), and the like.

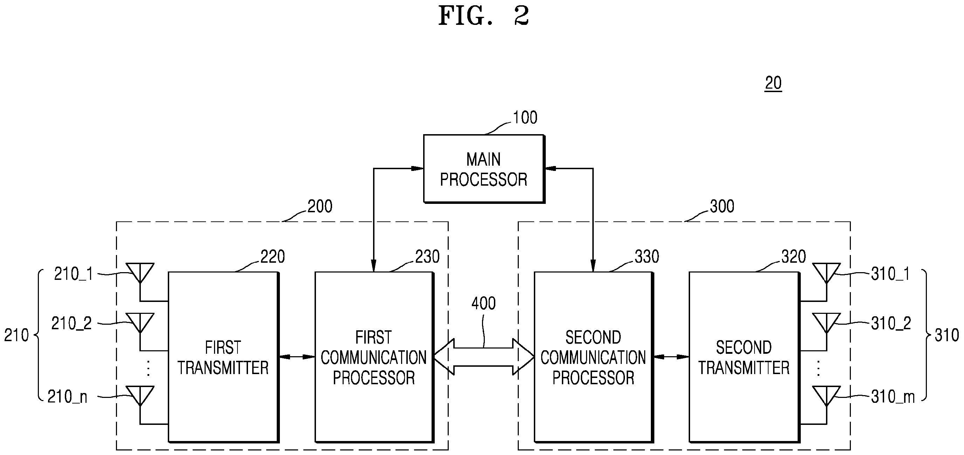

The detailed structure and operation of the electronic device 20 are described in detail with reference to FIG. 2.

FIG. 2 is a block diagram of an example of an electronic device 20.

Referring to FIG. 2, the electronic device 20 includes a main processor 100, a first communication chip 200, and a second communication chip 300. Furthermore, the electronic device 20 further includes an inner bus 400.

The main processor 100 may control the overall operation of the electronic device 20. In some implementations, the main processor 100 may be any one of an application processor (AP), a central processing unit (CPU), and the like.

The first communication chip 200 and the second communication chip 300 may perform communication between the electronic device 20 and an external device. In some implementations, the first communication chip 200 may perform cellular mobile communication with the base station 10 in a manner, such as long term evolution (LTE), new radio (NR), and the like, and the second communication chip 300 may perform short-range wireless communication with routers or other electronic devices in a manner, such as wireless-fidelity (Wi-Fi), Bluetooth, and the like. However, the disclosure is not limited thereto, and the first communication chip 200 and the second communication chip 300 may both perform cellular mobile communication, or the first communication chip 200 and the second communication chip 300 may both perform short-range wireless communication. However, in the following description, an implementation in which the first communication chip 200 performs cellular mobile communication, and the second communication chip 300 performs short-range wireless communication is mainly described.

The first communication chip 200 may include a first antenna module 210, a first transmitter 220, and a first communication processor 230.

The first antenna module 210 may include a plurality of antennas 210_1 to 210_n. The antennas 210_1 to 210_n may transmit a radio frequency (RF) signal generated by the first transmitter 220 to the base station 10. Furthermore, the antennas 210_1 to 210_n may receive an RF signal from the base station 10 or the external device.

The first transmitter 220 may transmit a signal through at least one of the antennas 210_1 to 210_n included in the first antenna module 210. The first transmitter 220 may output transmit power to at least one of the antennas 210_1 to 210_n included in the first antenna module 210 to transmit an RF signal.

The first transmitter 220 may transmit the RF signal to the base station 10 through the uplink channel 40. The first transmitter 220 may receive the RF signal from the base station 10 through the downlink channel 30.

The first communication processor 230 may set the transmit power of the first transmitter 220. In other words, the first communication processor 230 may arrange for the output of a desired RF signal through at least one of the antennas 210_1 to 210_n included in the first antenna module 210, by adjusting the transmit power of the first transmitter 220. The first communication processor 230 may adjust the transmit power of the first transmitter 220 such that at least one of the antennas 210_1 to 210_n output a desired RF signal, e.g., a signal having a desired signal strength.

In some implementations, the first communication processor 230 may directly adjust the transmit power of the first transmitter 220, and in some implementations, the first communication processor 230 may adjust the transmit power of the first transmitter 220 through a separate power management integrated circuit (PMIC).

The first communication processor 230 may adjust the transmit power of the first transmitter 220 based on an uplink transmit power control (TPC) command transmitted from the base station 10 to the electronic device 20 through the downlink channel 30. For example, in order to maintain a signal-to-interference ratio (SIR) of the RF signal received from the electronic device 20 at a target level, the base station 10 may transmit a TPC command to the electronic device 20 based on the estimated SIR. The first communication processor 230 may adjust the transmit power of the RF signal transmitted to the base station 10 through the uplink channel 40 based on the received TPC command.

The transmit power of the first transmitter 220 may be related to the energy radiated from the electronic device 20. In other words, strong electromagnetic waves may be generated from the electronic device 20 by RF signals generated with a high transmit power, and the electromagnetic waves may have harmful effects on users. Generally, electromagnetic waves may be generated from the electronic device 20 output of RF signals. RF signals having a transmit power exceeding a threshold value, i.e., high transmit power, may have harmful effects. The harmful effects on users by the electromagnetic waves may be measured through a specific absorption rate (SAR) value or a power density (PD) value. The SAR value and the PD value measured when the electronic device 20 transmits an RF signal may be limited through a regulation condition about a total exposure ratio (TER) value, and a TER value regulation condition may be the same as Equation 1 below.

[Equation 1]

$$TER = \sum_{n=0}^{N-1} \frac{SAR_{avr,n}}{SAR_{limit}} + \sum_{m=0}^{M-1} \frac{PD_{avr,m}}{PD_{limit}} < 1$$

In Equation 1, $SAR_{limit}$ may denote the limitation of an SAR value set by a public authority, $SAR_{avr,n}$ may denote the average value of SAR values in the n-th measurement interval, $PD_{limit}$ may denote the limitation of a PD value set by a public authority, and $PD_{avr,m}$ may denote the average value of PD values in the m-th measurement interval.

The SAR value and the PD value may be calculated through a typically known equation. In this state, the SAR value and the PD value may be proportional to the transmit power of the electronic device 20. As the TER value is calculated by the sum of the SAR value and the PD value, the TER value may be proportional to the transmit power of the electronic device 20. Accordingly, the TER value measured when the electronic device 20 transmits an RF signal may be increased or decreased by increasing or decreasing the transmit power of the electronic device 20.

To satisfy the TER value regulation condition such as Equation 1 described above, the first communication processor 230 may set a transmission limit power of the first transmitter 220. The first communication processor 230 may control the first transmitter 220 to transmit an RF signal with transmit power of the transmission limit power or less.

In this state, the first communication processor 230 may set the transmission limit power of the first transmitter 220 considering the effect of the electromagnetic waves by an RF signal transmitted by a second communication processor 330 included in the second communication chip 300 of the electronic device 20. To this end, in some implementations, the first communication processor 230 may receive the state of the second communication processor 330, may set a first allocated TER value indicating a TER value allocated to the first transmitter 220, based on the state of the first communication processor 230 and the state of the second communication processor 330, and may set the transmission limit power of each of the antennas 210_1 to 210_n included in the first antenna module 210, based on the first allocated TER value. The first communication processor 230 may set the transmit power of each of the antennas 210_1 to 210_n included in the first antenna module 210, based on the transmission limit power.

Furthermore, the first communication processor 230 may set a second allocated TER value indicating the TER value allocated to a second transmitter 320, based on the state of the first communication processor 230 and the state of the second communication processor 330, and may transmit the second allocated TER value to the second communication processor 330.

As such, the electronic device 20 which sets the first allocated TER value and the second allocated TER value based on the state of the first communication processor 230 and the state of the second communication processor 330, may provide optimal communication performance while satisfying the TER value regulation condition.

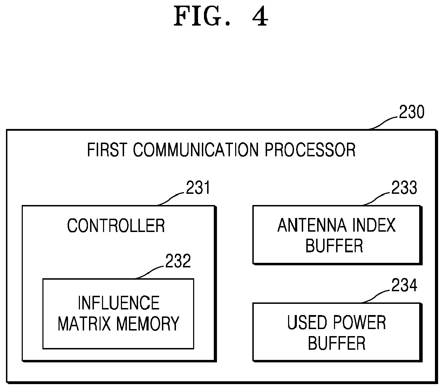

A detailed operation of the first communication processor 230 is described below with reference to FIG. 4.

The second communication chip 300 may include a second antenna module 310, the second transmitter 320, and the second communication processor 330.

The second antenna module 310 may include a plurality of antennas 310_1 to 310_m. The antennas 310_1 to 310_m may transmit an RF signal generated by the second transmitter 320 to routers or other electronic devices. Furthermore, the antennas 310_1 to 310_m may receive the RF signal from the routers or other electronic devices.

The second transmitter 320 may transmit a signal through at least one of the antennas 310_1 to 310_m included in the second antenna module 310. The second transmitter 320 may output transmit power to at least one of the antennas 310_1 to 310_m included in the second antenna module 310 so that the RF signal may be transmitted.

The second communication processor 330 may set the transmit power of the second transmitter 320. In other words, the second communication processor 330 may arrange for the output of a desired RF signal through at least one of the antennas 310_1 to 310_m included in the second antenna module 310, by adjusting the transmit power of the second transmitter 320. The second communication processor 330 may adjust the transmit power of second transmitter 320 such that at least one of the antennas 310_1 to 310_n output a desired RF signal, e.g., a signal having a desired signal strength.

In some implementations, the second communication processor 330 may directly adjust the transmit power of the second transmitter 320, and in some implementations, the second communication processor 330 may adjust the transmit power of the second transmitter 320 through a separate PMIC.

The transmit power of the second transmitter 320 may be related to the energy radiated from the electronic device 20. Accordingly, like the first communication processor 230, in order to satisfy the TER value regulation condition such as Equation 1 described above, the second communication processor 330 may set a transmission limit power of the second transmitter 320. The second communication processor 330 may control the second transmitter 320 to transmit the RF signal with transmit power of the transmission limit power or less.

In this state, the second communication processor 330 may transmit the state of the second communication processor 330 to the first communication processor 230, receive the second allocated TER value set by the first communication processor 230, and set the transmission limit power of each of the antennas 310_1 to 310_m included in the second antenna module 310, based on the second allocated TER value. The second communication processor 330 may set the transmit power of each of the antennas 310_1 to 310_m included in the second antenna module 310, based on the transmission limit power.

As described above, the first communication processor 230 may set the first allocated TER value and the second allocated TER value, and the second communication processor 330 may set the transmit power of each of the antennas 310_1 to 310_m included in the second antenna module 310, based on the second allocated TER value set by the first communication processor 230, but the disclosure is not limited thereto.

In some implementations, the second communication processor 330 may receive the state of the first communication processor 230 and set the first allocated TER value and the second allocated TER value based on the state of the first communication processor 230 and the state of the second communication processor 330, and the first communication processor 230 may set the transmit power of each of the antennas 210_1 to 210_n included in the first antenna module 210, based on the first allocated TER value set by the second communication processor 330. In other words, the first allocated TER value and the second allocated TER value may be set by any of the first communication processor 230 and the second communication processor 330.

The inner bus 400 may be connected between the first communication processor 230 and the second communication processor 330.

The inner bus 400 may transmit data received from the first communication processor 230 to the second communication processor 330. Furthermore, the inner bus 400 may transmit data received from the second communication processor 330 to the first communication processor 230. In this state, when the main processor 100 is in an off state, the inner bus 400 may be used as a data transmission path between the first communication processor 230 and the second communication processor 330. As such, the first communication processor 230 and the second communication processor 330 may mutually transmit data through the inner bus 400 regardless of the state of the main processor 100.

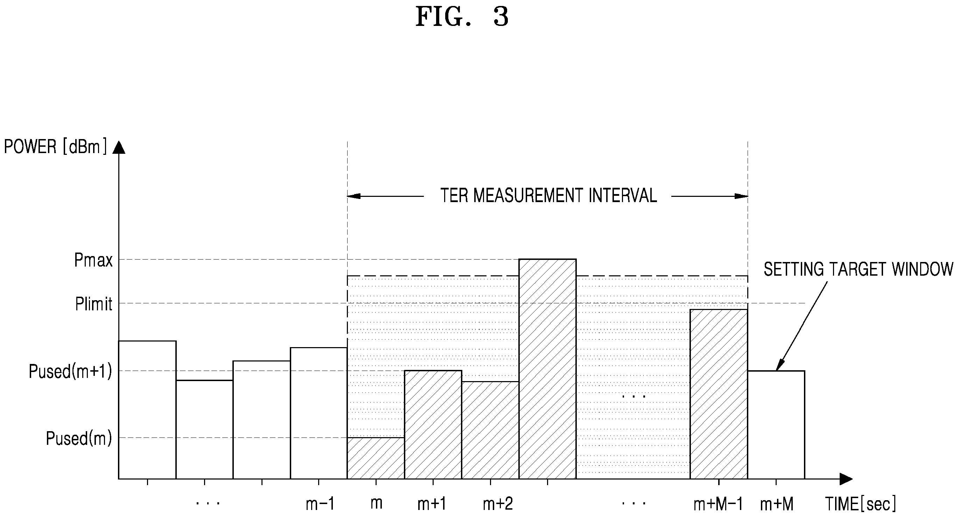

FIG. 3 is a graph for describing an example of a method of measuring a TES value, which is performed by an electronic device.

Referring to FIG. 3, a graph in the form of a histogram illustrates a result of measurement of used power over time. In the graph of FIG. 3, the horizontal axis may denote time and the vertical axis may denote used power, and in the graph in the form of a histogram, each section indicated by one block may correspond to one window.

The window may be a unit having a preset time length, for example, one window may have a time length of 250 ms. One window may be divided into N slots. A slot may indicate a time unit for transmitting a plurality of communication symbols. In some implementations, a plurality of communication processors may measure the transmit power of a plurality of transmitters in units of slots, and sum transmit power measured for each slot to thus obtain the transmit power in units of windows. In the implementation of FIG. 3, the transmit power of a window including a time point when t=m may be Pused(m), and the transmit power of a window including a time point when t=m+1 may be Pused(m+1).

A TER value measurement interval may mean a section in which a TER value is measured to determine whether the TER value regulation condition is satisfied. In the implementation of FIG. 3, the TER value measurement interval may include M windows.

The TER value measurement interval may be set based on a communication frequency band of the electronic device 20. For example, when the communication frequency band of the electronic device 20 is less than about 3 GHz, the TER value measurement interval may be 100 seconds, and may include about 400 windows. When the communication frequency band of the electronic device 20 is about 3 GHz or more and less than about 6 GHz, the TER value measurement interval may be 60 s, and may include 240 windows. When the communication frequency band of the electronic device 20 is 6 GHz or more, the TER value measurement interval may be 4 s, and may include 16 windows.

In some implementations, as the TER value is proportional to the transmit power of the electronic device 20, the electronic device 20 may calculate a TER value for the TER value measurement interval based on used power for the TER value measurement interval. In this state, the electronic device 20 may calculate the SAR value or the PD value of each window in the TER value measurement interval by using the transmit power in units of windows and a typically known equation, and calculate a TER value based on the operation result and Equation 1.

The electronic device 20 may calculate the transmission limit power Plimit of a setting target window, based on the calculated TER value, and set the transmit power of the setting target window, based on the transmission limit power Plimit of the setting target window.

The setting target window is a window for which transmit power is to be set based on the TER value of a TER value measurement interval, and which may be a window next to the windows included in the TER value measurement interval. In the implementation of FIG. 3, when the TER value measurement interval includes a total of M windows from a window including a time point when t=m to a window including a time point when t=m+M-1, the setting target window may be a window including a time point when t=m+M.

FIG. 4 is a block diagram showing an example of a first communication processor 230 of the electronic device 20.

Referring to FIG. 4, the first communication processor 230 includes a controller 231, an antenna index buffer 233, and a used power buffer 234.

The controller 231 may control the overall operation of the first communication processor 230. The controller 231 may control operation of the antenna index buffer 233 and the used power buffer 234.

The controller 231 may receive the state of the second communication processor 330 from the second communication processor 330.

In some implementations, the controller 231 may receive the state of the second communication processor 330 through the main processor 100 or the inner bus 400. For example, when the main processor 100 is in an on state of being in operation, the controller 231 may receive the state of the second communication processor 330 through the main processor 100. Reversely, when the main processor 100 is in an off state of not being in operation, the controller 231 may receive the state of the second communication processor 330 through the inner bus 400. Accordingly, as the controller 231 may receive the state of the second communication processor 330 regardless of whether the main processor 100 operates or not, power efficiency and data efficiency may be improved.

In some implementations, the controller 231 may set the first allocated TER value based on the state of the first communication processor 230 and the state of the second communication processor 330.

The first allocated TER value may indicate a TER value allocated to the first transmitter 220. In other words, the first allocated TER value may be a TER value corresponding to the transmission limit power of the first transmitter 220, and the TER value regulation condition may be satisfied as the controller 231 controls the first transmitter 220 to transmit an RF signal with transmit power of the transmission limit power or less corresponding to the first allocated TER value.

In some implementations, the state of the first communication processor 230 and the state of the second communication processor 330 may be an on state or an off state.

When the state of the first communication processor 230 is an on state, the first communication processor 230 may be in operation. When the state of the first communication processor 230 is an off state, the first communication processor 230 may not be in operation or may be in an idle state.

Furthermore, when the state of the second communication processor 330 is an on state, the second communication processor 330 may be in operation. When the state of the second communication processor 330 is an off state, the second communication processor 330 may not be in operation or may be in an idle state.

The controller 231 may set a communication mode based on the state of the first communication processor 230 and the state of the second communication processor 330. The controller 231 may set the first allocated TER value based on the communication mode.

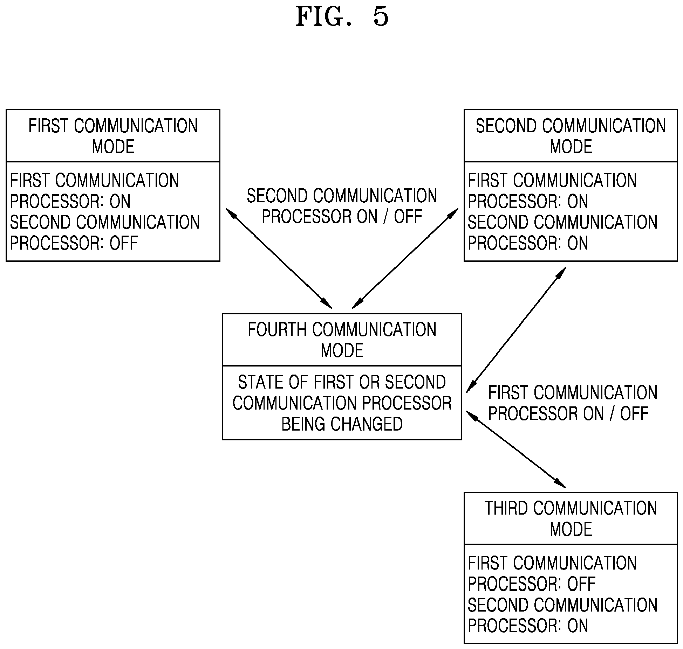

An example of a method of setting, by the controller 231, a communication mode is described in detail with reference to FIG. 5.

FIG. 5 is a view showing an example of a method of setting a communication mode in an electronic device.

Referring to FIG. 5, it may be seen that a state machine indicates the communication mode of an electronic device according to the state of the first communication processor 230 and the state of the second communication processor 330.

In some implementations, when the state of the first communication processor 230 is an on state and the state of the second communication processor 330 is an off state, the controller 231 may set the communication mode to a first communication mode. In other words, the first communication mode may be a state in which communication is performed only in the first communication processor 230 because the first communication processor 230 is in operation and the second communication processor 330 is not in operation. The first communication mode may comprise only the first communication processor 230 performing communication and not the second communication processor 330, i.e., the first communication processor 230 performing communication without the second communication processor 330 performing communication. Performing communication may comprise the first communication processor 230 arranging for the output of a desired RF signal through at least one of the antennas 210_1 to 210_n included in the first antenna module 210. In the first communication mode, the second communication processor 330 may not arrange for the output of any RF signal through any of the antennas 310_1 to 310_n included in the second antenna module 310, i.e., the second communication processor 330 may output no signal through any of the antennas 310_1 to 310_n included in the second antenna module 310. In the first communication mode, the second communication processor 330 and/or all of the antennas 310_1 to 310_n included in the second antenna module 310 may be inactive or off

In some implementations, when the state of the first communication processor 230 is an on state and the state of the second communication processor 330 is an on state, the controller 231 may set the communication mode to a second communication mode. In other words, the second communication mode may be a state in which communication is performed in both the first communication processor 230 and the second communication processor 330 because the first communication processor 230 and the second communication processor 330 are both in operation. The second communication mode may comprise both the first communication processor 230 and the second communication processor 330 performing communication. Performing communication may comprise the first communication processor 230 arranging for the output of a desired RF signal through at least one of the antennas 210_1 to 210_n included in the first antenna module 210, and the second communication processor 330 arranging for the output a desired RF signal through at least one of the antennas 310_1 to 310_n included in the second antenna module 310.

In some implementations, when the state of the first communication processor 230 is an off state and the state of the second communication processor 330 is an on state, the controller 231 may set the communication mode to a third communication mode. In other words, the third communication mode may be a state in which communication is performed only in the second communication processor 330 because the first communication processor 230 is not in operation and the second communication processor 330 is in operation. The third communication mode may comprise only the second communication processor 330 performing communication and not the first communication processor 230, i.e., the second communication processor 330 performing communication without the first communication processor 230 performing communication. Performing communication may comprise the second communication processor 330 arranging for the output of a desired RF signal through at least one of the antennas 310_1 to 310_n included in the second antenna module 310. In the third communication mode, the first communication processor 230 may not arrange for the output of any RF signal through any of the antennas 210_1 to 210_n included in the first antenna module 210, i.e., the first communication processor 230 may output no signal through any of the antennas 210_1 to 210_n included in the first antenna module 210. In the third communication mode, the first communication processor 230 and/or all of the antennas 210_1 to 210_n included in the first antenna module 210 may be inactive or off.

In some implementations, when the state of the first communication processor 230 or the state of the second communication processor 330 is changed, the controller 231 may set the communication mode temporarily to a fourth communication mode. The fourth communication mode may be a state in which the instantaneous increase of radiated electromagnetic waves is prevented as the transmit power used in the first communication chip 200 and the second communication chip 300 is instantaneously increased due to a change in any one of the state of the first communication processor 230 and the state of the second communication processor 330.

When, in the first communication mode, the state of the second communication processor 330 is changed to an on state, the controller 231 may set the communication mode temporarily to the fourth communication mode and then to the second communication mode. The time during which the communication mode is maintained in the fourth communication mode may be preset to a time during which a situation in which the TER value of the electronic device 20 does not instantaneously satisfy the TER value regulation condition according to the change in the communication mode does not occur. The time during which the communication mode is maintained in the fourth communication mode may be preset. The time may be a timer period during which the TER value of the device 20 does not satisfy the TER value regulation condition.

Furthermore, when, in the second communication mode, the state of the second communication processor 330 is changed to an off state, the controller 231 may set the communication mode temporarily to the fourth communication mode and then to the first communication mode.

Likewise, when, in the second communication mode, the state of the first communication processor 230 is changed to an off state, the controller 231 may set the communication mode temporarily to the fourth communication mode and then to the third communication mode. When, in the third communication mode, the state of the first communication processor 230 is changed to an on state, the controller 231 may set the communication mode temporarily to the fourth communication mode and then to the second communication mode.

Referring back to FIG. 4, in some implementations, after setting the communication mode by the method described above with reference to FIG. 5, the controller 231 may set the first allocated TER value based on the communication mode.

Furthermore, the controller 231 may set the second allocated TER value based on the communication mode and transmit the set second allocated TER value to the second communication processor 330.

The second allocated TER value may indicate a TER value allocated to the second transmitter 320. In other words, the second allocated TER value may be a TER value corresponding to the transmission limit power of the second transmitter 320, and the TER value regulation condition may be satisfied as the controller 231, by setting the second allocated TER value, controls the second transmitter 320 to transmit an RF signal with transmit power of the transmission limit power or less corresponding to the second allocated TER value

As the controller 231 sets the first allocated TER value and the second allocated TER value based on the communication mode, the total TER value of the electronic device 20 may satisfy the TER value regulation condition.

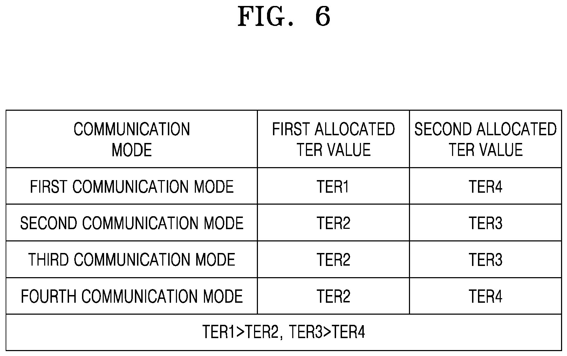

In some implementations, an example of the method of setting, by the controller 231, a first allocated TER value and a second allocated TER value based on a communication mode may be described in detail with reference to FIG. 6.

FIG. 6 is a table showing an example of a method of setting a first allocated TER value and a second allocated TER value based on a communication mode in an electronic device.

Referring to FIG. 6, the table shows first allocated TER values and second allocated TER values according to the communication mode set by the controller 231.

In some implementations, when the communication mode is a first communication mode, the controller 231 may set the first allocated TER value as a first TER value. When the communication mode is a second communication mode, a third communication mode, or a fourth communication mode, the controller 231 may set the first allocated TER value as a second TER value. In this state, the second TER value may be lower than the first TER value.

In detail, when the first communication processor 230 alone is in operation (when the communication mode is a first communication mode) i.e., the second communication processor 330 is inactive or off, as there is no or little radiation of electromagnetic waves by the second communication processor 330, the controller 231 may set the first allocated TER value as a first TER value that is relatively high.

When the first communication processor 230 and the second communication processor 330 are simultaneously in operation (when the communication mode is the second communication mode), for the total TER value of the electronic device 20 to satisfy the TER value regulation condition, the controller 231 may set the first allocated TER value as a second TER value that is relatively low. The second TER value may be lower than the first TER value.

When the first communication processor 230 is not in operation (when the communication mode is the third communication mode), as there hardly is signal transmission by the first communication processor 230, the controller 231 may set the first allocated TER value as the relatively low second TER value.

When any one of the state of the first communication processor 230 and the state of the second communication processor 330 is changed (when the communication mode is the fourth communication mode), in order to prevent the radiated electromagnetic waves from being instantaneously increased, the controller 231 may set the first allocated TER value as the relatively low second TER value.

In some implementations, when the communication mode is the second communication mode or the third communication mode, the controller 231 may set the second allocated TER value as a third TER value. When the communication mode is the first communication mode or the fourth communication mode, the controller 231 may set the second allocated TER value as a fourth TER value. In this state, the fourth TER value may be lower than the third TER value.

In detail, when the second communication processor 330 is not in operation (when the communication mode is the first communication mode), the controller 231 may set the second allocated TER value as a fourth TER value that is relatively low. The sum of the fourth TER value and the first TER value may satisfy the TER value regulation condition.

When the first communication processor 230 and the second communication processor 330 are simultaneously in operation (when the communication mode is the second communication mode), for smooth operation of the second communication processor 330, the controller 231 may set the second allocated TER value as a third TER value that is relatively high. In this state, as the controller 231 sets the first allocated TER value as the relatively low second TER value, the total TER value of the electronic device 20 may satisfy the TER value regulation condition. The sum of the third TER value and the second TER value may satisfy the TER value regulation condition.

When the second communication processor 330 alone is in operation (when the communication mode is the third communication mode), as there is no or little radiation of electromagnetic waves by the first communication processor 230, the controller 231 may set the second allocated TER value as the relatively high third TER value.

When any one of the state of the first communication processor 230 and the state of the second communication processor 330 is changed (when the communication mode is the fourth communication mode), in order to prevent the radiated electromagnetic waves from being instantaneously increased, the controller 231 may set the second allocated TER value as the relatively low fourth TER value.

Referring back to FIG. 4, in some implementations, the controller 231 may set the first allocated TER value based on a coupling coefficient, the state of the first communication processor 230, and the state of the second communication processor 330.

The coupling coefficient may be a value indicating a correlation between exposure by the first antenna module 210 and exposure by the second antenna module 310. The controller 231 may set the coupling coefficient based on a mutual influence matrix stored in an influence matrix memory 232 in the controller 231.

The mutual influence matrix may be a matrix indicating a correlation between exposure by the antennas 210_1 to 210_n included in the first antenna module 210 and exposure by the antennas 310_1 to 310_m included in the second antenna module 310.

The number of rows of the mutual influence matrix may correspond to the number of antennas included in the first antenna module 210 (n in the implementation of FIG. 2, where n is a natural number greater than or equal to 2), and the number of columns of the mutual influence matrix may correspond to the number of antennas included in the second antenna module 310 (m in the implementation of FIG. 2, where m is a natural number greater than or equal to 2).

In this state, the value in the i-th row and the j-th column of the mutual influence matrix (in the implementation of FIG. 2, i is a natural number greater than or equal to 1 and less than or equal to n, and j is a natural number greater than or equal to 1 and less than or equal to m) may indicate a degree of effect of the exposure generated by the RF signal transmission of the i-th antenna 210_i included in the first antenna module 210 on the j-th antenna 310_j included in the second antenna module 310. Furthermore, the value of the i-th row and the j-th column of the mutual influence matrix may indicate a degree of effect of the exposure generated by the RF signal transmission of the j-th antenna 310_j included in the second antenna module 310 on the i-th antenna 210_i included in the first antenna module 210.

In some implementations, the mutual influence matrix may be previously calculated based on at least one of: a correlation between the antennas 210_1 to 210_n included in the first antenna module 210 and the antennas 310_1 to 310_m included in the second antenna module 310, electromagnetic waves radiation directions of the antennas 210_1 to 210_n included in the first antenna module 210 and the antennas 310_1 to 310_m included in the second antenna module 310, an electromagnetic waves radiation amount of the antennas 210_1 to 210_n included in the first antenna module 210 and the antennas 310_1 to 310_m included in the second antenna module 310, and a distance between the antennas 210_1 to 210_n included in the first antenna module 210 and the antennas 310_1 to 310_m included in the second antenna module 310.

The controller 231 may set a coupling coefficient based on correlation coefficients between the antenna in use among the antennas 210_1 to 210_n included in the first antenna module 210 and the antenna in use among the antennas 310_1 to 310_m included in the second antenna module 310, which are obtained from the mutual influence matrix.

The controller 231 may set the coupling coefficient to 0 when the correlation coefficients between the antenna in use among the antennas 210_1 to 210_n included in the first antenna module 210 and the antenna in use among the antennas 310_1 to 310_m included in the second antenna module 310, which are obtained from the mutual influence matrix, are all 0.

For example, when the antenna in use among the antennas 210_1 to 210_n included in the first antenna module 210 is the first antenna 210_1 and the second antenna 210_2, and the antenna in use among the antennas 310_1 to 310_m included in the second antenna module 310 is the first antenna 310_1, if the value in row 1 and column 1 and the value in row 2 and column 1 in the mutual influence matrix are all 0, the coupling coefficient may be set to 0.

Reversely, when at least one of the correlation coefficients between the antenna in use among the antennas 210_1 to 210_n included in the first antenna module 210 and the antenna in use among the antennas 310_1 to 310_m included in the second antenna module 310, which are obtained from the mutual influence matrix, is not 0, the controller 231 may set the coupling coefficient to 1.

For example, when the antennas in use among the antennas 210_1 to 210_n included in the first antenna module 210 are the first antenna 210_1 and the second antenna 210_2, and the antenna in use among the antennas 310_1 to 310_m included in the second antenna module 310 is the first antenna 310_1, if any one of the value in row 1 and column 1 and the value in row 2 and column 1 in the mutual influence matrix is not 0, the coupling coefficient may be set to 1.

The controller 231 may set the communication mode based on the coupling coefficient, the state of the first communication processor 230, and the state of the second communication processor 330. The controller 231 may set the first allocated TER value based on the communication mode.

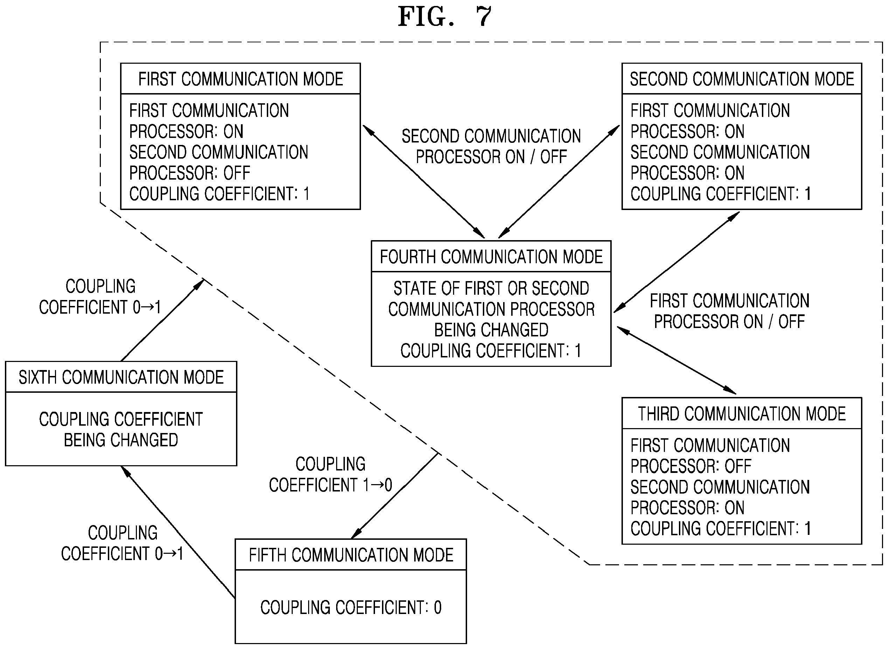

An example of a method of setting, by the controller 231, a communication mode based on the coupling coefficient, the state of the first communication processor 230, and the state of the second communication processor 330 may be described in detail with reference to FIG. 7.

FIG. 7 is a view showing another example of a method of setting a communication mode in an electronic device.

Referring to FIG. 7, a state machine indicates the communication mode of the electronic device according to the coupling coefficient, the state of the first communication processor 230, and the state of the second communication processor 330.

In some implementations, when the coupling coefficient is 1, the state of the first communication processor 230 is an on state, and the state of the second communication processor 330 is an off state, the controller 231 may set the communication mode to a first communication mode.

In some implementations, when the coupling coefficient is 1, the state of the first communication processor 230 is an on state, and the state of the second communication processor 330 is an on state, the controller 231 may set the communication mode to a second communication mode.

In some implementations, when the coupling coefficient is 1, the state of the first communication processor 230 is an off state, and the state of the second communication processor 330 is an on state, the controller 231 may set the communication mode to a third communication mode.

In some implementations, when the coupling coefficient is 1, and the state of the first communication processor 230 or the state of the second communication processor 330 is changed, the controller 231 may temporarily set the communication mode to a fourth communication mode.

In other words, the first to fourth communication modes of the implementation of FIG. 7 may be respectively the same as the first to fourth communication modes of the implementation of FIG. 5 in the state of the first communication processor 230 and the state of the second communication processor 330, and may be a state in which a condition that the coupling coefficient is 1 is added. In this state, the change of the communication mode among the first to fourth communication modes may be the same as that described above with reference to FIG. 5.

In some implementations, when the coupling coefficient is 0, the controller 231 may set the communication mode to a fifth communication mode. In other words, the fifth communication mode may be a state in which there is no correlation between the exposure by the first antenna module 210 and the exposure by the second antenna module 310.

In some implementations, when the coupling coefficient is changed from 0 to 1, the controller 231 may set the communication mode temporarily to a sixth communication mode. In other words, the sixth communication mode is a state in which, as the antenna in use among the antennas 210_1 to 210_n included in the first antenna module 210 or the antenna in use among the antennas 310_1 to 310_m included in the second antenna module 310 is changed so that the coupling coefficient is changed, the correlation between the exposure by the first antenna module 210 and the exposure by the second antenna module 310 occurs, and a case in which the TER value does not instantaneously satisfy the TER value regulation condition is prevented.

When the coupling coefficient is changed from 0 to 1, the controller 231 may set the communication mode temporarily to the sixth communication mode and then set the communication mode to any one of the first to fourth communication modes based on the state of the first communication processor 230 and the state of the second communication processor 330. In this state, the time during which the communication mode is maintained as the sixth communication mode may be previously determined as the time during which a situation in which the TER value of the electronic device 20 does not instantaneously satisfy the TER value regulation condition according to the change in the communication mode does not occur.

When the coupling coefficient is changed from 1 to 0, the controller 231 may set the communication mode directly to the fifth communication mode, not temporarily to the sixth communication mode. This is because, as the coupling coefficient is changed from 1 to 0, the correlation between the exposure by the first antenna module 210 and the exposure by the second antenna module 310 disappears so that the TER value is changed to be low.

Referring back to FIG. 4, in some implementations, the controller 231 may set the communication mode by the method described above with reference to FIG. 7, and then set the first allocated TER value based on the communication mode.

Furthermore, the controller 231 may set the second allocated TER value based on the communication mode and transmit the second allocated TER value to the second communication processor 330.

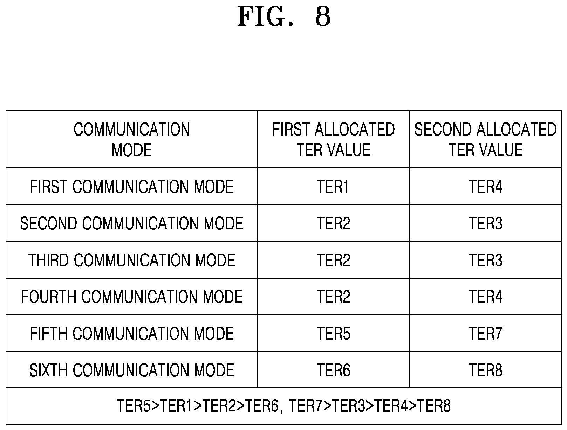

In some implementations, an example of a method of setting, by the controller 231, a first allocated TER value and a second allocated TER value based on a communication mode may be described in detail with reference to FIG. 8.

FIG. 8 is a table showing another example of a method of setting an allocated TER value based on a communication mode in an electronic device.

Referring to FIG. 8, the table shows first allocated TER values and second allocated TER values according to the communication mode set by the controller 231.

In this state, as the first allocated TER value and the second allocated TER value when the communication mode is any one of the first to fourth communication modes may be set to be the same as those in the implementation of FIG. 6, a detailed description thereof is omitted.

In some implementations, when the communication mode is the fifth communication mode, the controller 231 may set the first allocated TER value as a fifth TER value. In this state, the fifth TER value may be higher than the first TER value. In other words, when the communication mode is the fifth communication mode, the controller 231 may set the first allocated TER value to be higher than the first TER value.

In some implementations, when the communication mode is the sixth communication mode, the controller 231 may set the first allocated TER value as a sixth TER value. In this state, the sixth TER value may be lower than the second TER value. In other words, when the communication mode is the sixth communication mode, the controller 231 may set the first allocated TER value to be lower than the second TER value.

In detail, when the coupling coefficient is 0, as there is no limitation in the radiation of electromagnetic waves by the second communication processor 330 even when the first communication processor 230 radiates a lot of electromagnetic waves, the controller 231 may set the first allocated TER value as a fifth TER value that is higher than the first TER value.

When the coupling coefficient is changed from 0 to 1, the correlation between the exposure by the first antenna module 210 and the exposure by the second antenna module 310 occurs, and instantaneously, the TER value may not satisfy the TER value regulation condition. Then, as the effect thereof may be greater than when the state of the first communication processor 230 or the state of the second communication processor 330 is changed, the controller 231 may set the first allocated TER value as a sixth TER value that is lower than the second TER value.

In some implementations, when the communication mode is the fifth communication mode, the controller 231 may set the second allocated TER value as a seventh TER value. In this state, the seventh TER value may be higher than the third TER value. In other words, when the communication mode is the fifth communication mode, the controller 231 may set the second allocated TER value to be higher than the third TER value.

In some implementations, when the communication mode is the sixth communication mode, the controller 231 may set the second allocated TER value as an eighth TER value. In this state, the eighth TER value may be lower than the fourth TER value. In other words, when the communication mode is the sixth communication mode, the controller 231 may set the second allocated TER value to be lower than the fourth TER value.

In detail, when the coupling coefficient is 0, as there is no limitation in the radiation of electromagnetic waves by the first communication processor 230 even when the second communication processor 330 radiates a lot of electromagnetic waves, the controller 231 may set the second allocated TER value as a seventh TER value that is higher than the third TER value.

When the coupling coefficient is changed from 0 to 1, the correlation between the exposure by the first antenna module 210 and the exposure by the second antenna module 310 occurs, and instantaneously, the TER value may not satisfy the TER value regulation condition. Then, as the effect thereof may be greater than when the state of the first communication processor 230 or the state of the second communication processor 330 is changed, the controller 231 may set the second allocated TER value as an eighth TER value that is lower than the fourth TER value.

Referring back to FIG. 4, the controller 231 may set the transmission limit power of each of the antennas 210_1 to 210_n included in the first antenna module 210, based on the first allocated TER value. In this state, the controller 231 may set transmission limit power by using the values stored in the antenna index buffer 233 and the used power buffer 234.

The antenna index buffer 233 may store a use antenna index that is an index of one or more use antennas used in each of windows included in the antennas 210_1 to 210_n included in the first antenna module 210.

The use antenna may mean an antenna used for transmitting an RF signal. The controller 231 may store, in the antenna index buffer 233, a use antenna index corresponding to each window.

The used power buffer 234 may store the used power of an antenna corresponding to the use antenna index. The first communication processor 230 may store, in the used power buffer 234, used power used in an antenna corresponding to the use antenna index stored in the antenna index buffer 233.

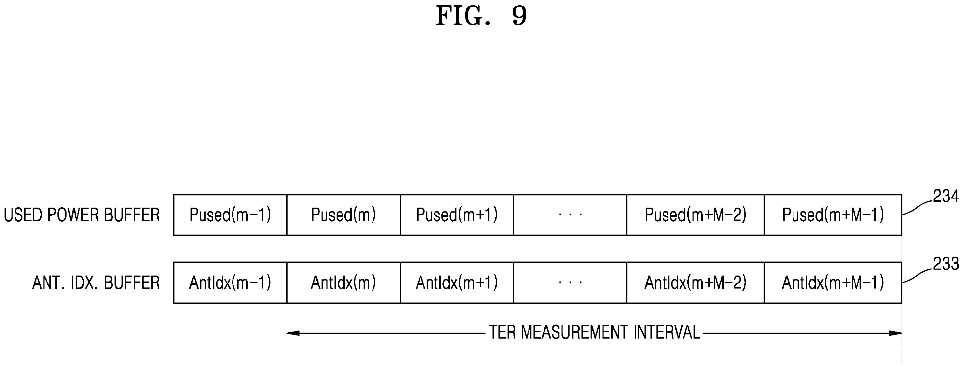

Examples of the antenna index buffer 233 and the used power buffer 234 may be described with reference to FIG. 9.

FIG. 9 is a view showing an example of an antenna index buffer 233 and an example of a used power buffer 234 of an electronic device.

Referring to FIG. 9, the used power buffer 234 and the antenna index buffer 233 are arranged on the upper and lower sides, respectively.

The use antenna index of a corresponding window may be stored in each region of the antenna index buffer 233. For example, the use antenna index of a window including a time point when t=m may be stored in a region indicated by AntIdx(m), and the use antenna index of a window including a time point when t=m+M-1 may be stored in a region indicated by AntIdx(m+M-1).

When the use antenna includes a plurality of use antennas in a window including a specific time point, a plurality of use antenna indexes may be respectively stored in a plurality of antenna index buffers.

The used power of a use antenna in a corresponding window may be stored in each region of the used power buffer 234. For example, the used power of a use antenna in a window including a time point when t=m may be stored in a region indicated by Pused(m), and the used power of a use antenna in a window including a time point when t=m+M-1 may be stored in a region indicated by Pused(m+M-1).

In this state, the used power stored in each region of the used power buffer 234 may correspond to the use antenna index stored in each region of the antenna index buffer 233. For example, the used power of a use antenna corresponding to the use antenna index stored in the AntIdx(m) region of the antenna index buffer 233 may be stored in the Pused(m) region of the used power buffer 234.

When the use antenna includes a plurality of use antennas in a window including a specific time point, the used power of the use antennas may be respectively stored in a plurality of use power buffers

Referring back to FIG. 4, the controller 231 may set a limit TER value of each of the antennas 210_1 to 210_n included in the first antenna module 210, based on a first influence matrix and the first allocated TER value.

The first influence matrix may be a matrix indicating a correlation between exposures of the respective antennas 210_1 to 210_n included in the first antenna module 210.

The number of rows and the number of columns of the first influence matrix may correspond to the number of antennas included in the first antenna module 210 (n in the implementation of FIG. 2, where n is a natural number greater than or equal to 2).

In this state, the value in the i-th row and the j-th column (in the implementation of FIG. 2, i and j are both natural numbers greater than or equal to 1 and less than or equal to n) of the first influence matrix may indicate a degree of effect of the exposure generated by the RF signal transmission of the i-th antenna 210_i included in the first antenna module 210 on the j-th antenna 210_j included in the first antenna module 210. In this state, as the degree of effect of the exposure generated by the RF signal transmission of the i-th antenna 210_i included in the first antenna module 210 on the j-th antenna 210_j included in the first antenna module 210 is the same as the degree of effect of the exposure generated by the RF signal transmission of the j-th antenna 210_j included in the first antenna module 210 on the i-th antenna 210_i included in the first antenna module 210, the influence matrix may be a symmetrical matrix.

In some implementations, the first influence matrix may be previously calculated based on at least one of the correlation between the antennas 210_1 to 210_n included in the first antenna module 210, the electromagnetic waves radiation direction of the antennas 210_1 to 210_n included in the first antenna module 210, the electromagnetic waves radiation amount of the antennas 210_1 to 210_n included in the first antenna module 210, and the distance between the antennas 210_1 to 210_n included in the first antenna module 210.

The controller 231 may read the use antenna index stored in the antenna index buffer 233 and the used power stored in the used power buffer 234, and may use the read use antenna index and used power for calculating the limit TER value of each of the antennas 210_1 to 210_n included in the first antenna module 210. In this state, the limit TER value may be a TER value corresponding to the transmit power that can be used by each of the antennas 210_1 to 210_n included in the first antenna module 210 in the setting target window.

The controller 231 may set the transmission limit power of each of the antennas 210_1 to 210_n included in the first antenna module 210, based on the limit TER value.

In detail, the controller 231 may calculate, based on the calculated limit TER value, a remaining TER value indicating how much less the TER value is used than the limit TER value during the TER measurement interval. The controller 231 may calculate, based on the remaining TER value, an available TER value that is a limit of the TER value to be used in the setting target window. The controller 231 may calculate the transmission limit power of each of the antennas 210_1 to 210_n included in the first antenna module 210, based on the available TER value.

The controller 231 may set the transmit power of each of the antennas 210_1 to 210_n included in the first antenna module 210, based on the transmission limit power.

As such, as the controller 231 of the electronic device 20 sets the first allocated TER value and the second allocated TER value based on the state of the first communication processor 230 and the state of the second communication processor 330, and sets the transmit power based thereon, optimal communication performance while satisfying the TER value regulation condition may be provided.

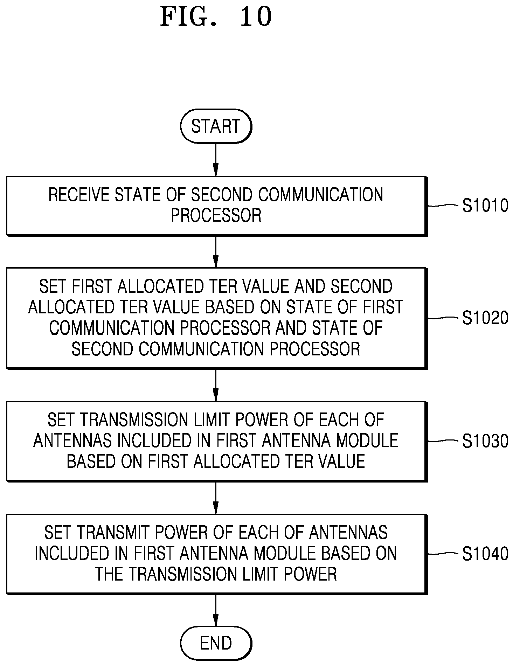

FIG. 10 is a flowchart of an example of an operating method of an electronic device.

Referring to FIG. 10, in operation S1010, the first communication processor 230 of the electronic device 20 may receive the state of the second communication processor 330. In this state, the first communication processor 230 may receive the state of the second communication processor 330 through the main processor 100 or the inner bus 400.

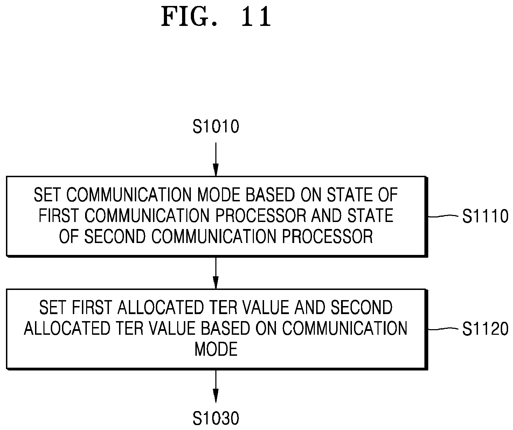

In operation S1020, the first communication processor 230 of the electronic device 20 may set the first allocated TER value and the second allocated TER value based on the state of the first communication processor 230 and the state of the second communication processor 330. The method of setting, by the first communication processor 230, a first allocated TER value and a second allocated TER value may be the same as illustrated in FIG. 11.

FIG. 11 is a flowchart of an example of a method of setting a first allocated TER value and a second allocated TER value in an electronic device.

Referring to FIG. 11, in operation S1110, the first communication processor 230 of the electronic device 20 may set a communication mode based on the state of the first communication processor 230 and the state of the second communication processor 330.

In some implementations, the first communication processor 230 of the electronic device 20 may set a communication mode, by using the state machine illustrated in FIG. 5, based on the state of the first communication processor 230 and the state of the second communication processor 330.

In some implementations, the first communication processor 230 of the electronic device 20 may set a communication mode, by using the state machine illustrated in FIG. 7, based on the coupling coefficient, the state of the first communication processor 230, and the state of the second communication processor 330.

In operation S1120, the first communication processor 230 of the electronic device 20 may set the first allocated TER value and the second allocated TER value based on the communication mode.

In some implementations, when the communication mode is set by using the state machine illustrated in FIG. 5, the first communication processor 230 of the electronic device 20 may set the first allocated TER value and the second allocated TER value, by using the table illustrated in FIG. 6, based on the communication mode.

In some implementations, when the communication mode is set by using the state machine illustrated in FIG. 7, the first communication processor 230 of the electronic device 20 may set the first allocated TER value and the second allocated TER value, by using the table illustrated in FIG. 8, based on the communication mode.

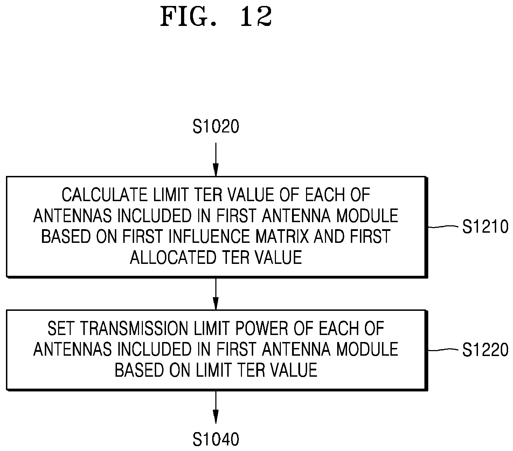

Referring back to FIG. 10, in operation S1030, the first communication processor 230 of the electronic device 20 may set the transmission limit power of each of the antennas 210_1 to 210_n included in the first antenna module 210, based on the first allocated TER value. The method of setting, by the first communication processor 230, transmission limit power may be the same as illustrated in FIG. 12.

FIG. 12 is a flowchart of an example of a method of setting transmission limit power in an electronic device.

Referring to FIG. 12, in operation S1210, the first communication processor 230 of the electronic device 20 may calculate the limit TER value of each of the antennas 210_1 to 210_n included in the first antenna module 210, based on the first influence matrix and the first allocated TER value. The first communication processor 230 may calculate the limit TER value of each of the antennas 210_1 to 210_n included in the first antenna module 210, based on the use antenna index and the used power.

In operation S1220, the first communication processor 230 of the electronic device 20 may set the transmission limit power of each of the antennas 210_1 to 210_n included in the first antenna module 210, based on the limit TER value. The first communication processor 230 may calculate a remaining TER value based on the calculated limit TER value, calculate an available TER value based on the remaining TER value, and calculate the transmission limit power of each of the antennas 210_1 to 210_n included in the first antenna module 210, based on the available TER value.

Referring back to FIG. 10, in operation S1040, the first communication processor 230 of the electronic device 20 may set the transmit power of each of the antennas 210_1 to 210_n included in the first antenna module 210, based on the transmission limit power.

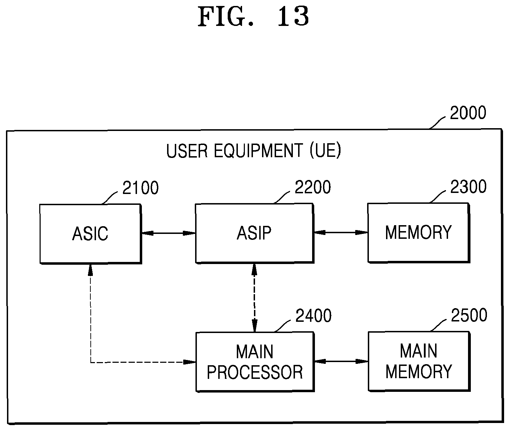

FIG. 13 is a block diagram of an example user equipment (UE) 2000.

Referring to FIG. 13, the UE 2000 may include an application-specific integrated circuit (ASIC) 2100, an application-specific instruction set processor (ASIP) 2200, a memory 2300, a main processor 2400, and a main memory 2500. Two or more of the ASIC 2100, the ASIP 2200 and the main processor 2400 may communicate with each other. Furthermore, at least two of the ASIC 2100, the ASIP 2200, the memory 2300, the main processor 2400, and the main memory 2500 may be built in one chip.

The ASIC 2100, which is an integrated circuit customized for a specific use, may include, for example, a radio frequency integrated circuit (RFIC), a modulator, a demodulator, and the like. The ASIP 2200 may support a dedicated instruction set for a specific application, and execute instructions included in the instruction set. The memory 2300 may communicate with the ASIP 2200, and as a non-transitory storage device, may store a plurality of instructions executed by the ASIP 2200. For example, the memory 2300 may include any type of memory accessible by the ASIP 2200, for example, random access memory (RAM), read only memory (ROM), a tape, a magnetic disk, an optical disk, volatile memory, non-volatile memory, and a combination thereof.

The main processor 2400 may control the UE 2000 by executing a plurality of instructions. For example, the main processor 2400 may control the ASIC 2100 and the ASIP 2200, and process data received through a wireless communication network or a user's input on the UE 2000. The main memory 2500 may communicate with the main processor 2400, and as a non-transitory storage device, may store a plurality of instructions that are executed by the main processor 2400. For example, the main memory 2500 may include any type of memory accessible by the main processor 2400, for example, RAM, ROM, a tape, a magnetic disk, an optical disk, volatile memory, non-volatile memory, and a combination thereof.

The elements of the electronic device 20 according to the implementation described above, or the operations of an operating method of the electronic device 20 according to the implementation described above, may be included in at least one of the element included in the UE 2000 of FIG. 13. For example, the electronic device 20 of FIG. 3 or at least one of the operations described above of the operating method of the electronic device 20 may be implemented by the instructions stored in the memory 2300, and as the ASIP 2200 executes the instructions stored in the memory 2300, the electronic device 20 or at least one of the operations of the operating method of the electronic device 20 may be executed. As another example, the electronic device 20 of FIG. 3 or at least one of the operations described above of the operating method of the electronic device 20 may be implemented as a hardware block and included in the ASIC 2100. As another example, the electronic device 20 of FIG. 3 or at least one of the operations described above of the operating method of the electronic device 20 may be implemented by the instructions stored in the main memory 2500, and as the main processor 2400 executes the instructions stored in the main memory 2500, the electronic device 20 or at least one of the operations of the operating method of the electronic device 20 may be performed.

While this specification contains many specific implementation details, these should not be construed as limitations on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

While the disclosure has been shown and described with reference to implementations using specific terminologies, the implementations and terminologies should be considered in descriptive sense only and not for purposes of limitation. Therefore, it will be understood by those of ordinary skill in the art that various changes in form and details may be made therein without departing from the scope of the disclosure as defined by the following claims.

Embodiments are set out in the following clauses:

Clause 1: An electronic device comprising:

a first plurality of antennas;
a first transmitter configured to transmit a signal through at least one antenna of the first plurality of antennas;
a first communication processor configured to set transmit power of the first transmitter;
a second plurality of antennas;
a second transmitter configured to transmit a signal through at least one antenna of the second plurality of antennas; and
a second communication processor configured to set transmit power of the second transmitter, wherein the first communication processor is configured to:

set a first allocated total exposure ratio (TER) value indicating a TER value allocated to the first transmitter based on a state of the first communication processor and a state of the second communication processor;
set transmission limit power of each antenna of the first plurality of antennas based on the first allocated TER value; and
set transmit power of each antenna of the first plurality of antennas based on the transmission limit power.

Clause 2: The electronic device of clause 1, comprising a main processor configured to control an overall operation of the electronic device,
wherein the first communication processor is configured to receive the state of the second communication processor through the main processor.

Clause 3 The electronic device of clause 1 or 2, comprising an inner bus connecting the first communication processor with the second communication processor,

wherein the inner bus is configured to transmit data between the first communication processor and the second communication processor, and wherein the first communication processor is configured to receive the state of the second communication processor through the inner bus.

Clause 4 The electronic device of any of clauses 1 to 3, wherein the first communication processor is configured to set a communication mode based on the state of the first communication processor and the state of the second communication processor, and to set the first allocated TER value based on the communication mode.

Clause 5 The electronic device of clause 4, wherein the first communication processor is configured to:

set the communication mode to a first communication mode based on the state of the first communication processor being an on state and the state of the second communication processor being an off state;
set the communication mode to a second communication mode based on the state of the first communication processor being the on state and the state of the second communication processor being an on state;
set the communication mode to a third communication mode based on the state of the first communication processor being an off state and the state of the second communication processor being the on state; and
set the communication mode temporarily to a fourth communication mode based on the state of the first communication processor or the state of the second communication processor being changed.

Clause 6 The electronic device of clause 5, wherein the first communication processor is configured to:

set the first allocated TER value as a first TER value based on the communication mode being the first communication mode; and

set the first allocated TER value as a second TER value that is lower than the first TER value based on the communication mode being the second communication mode, the third communication mode, or the fourth communication mode.

Clause 7 The electronic device of clause 5 or 6, wherein the first communication processor is configured to:

set a second allocated TER value indicating a TER value allocated to the second transmitter based on the communication mode, and transmit the second allocated TER value to the second communication processor;
set the second allocated TER value as a third TER value based on the communication mode being the second communication mode or the third communication mode; and
set the second allocated TER value as a fourth TER value that is lower than the third TER value based on the communication mode being the first communication mode or the fourth communication mode.

Clause 8 The electronic device of any of clauses 1 to 7, wherein the first communication processor is configured to:

set a limit TER value of each antenna of the first plurality of antennas based on the first allocated TER value and a first influence matrix indicating a correlation between a plurality of exposures by the first plurality of antennas; and
set the transmission limit power based on the limit TER value.

Clause 9 An electronic device comprising:

a first plurality of antennas;
a first transmitter configured to transmit a signal through at least one antenna of the first plurality of antennas;
a first communication processor configured to set transmit power of the first transmitter;
a second plurality of antennas;
a second transmitter configured to transmit a signal through at least one antenna of the second plurality of antennas; and
a second communication processor configured to set transmit power of the second transmitter,
wherein the first communication processor is further configured to:

set a first allocated total exposure ratio (TER) value indicating a TER value allocated to the first transmitter based on a coupling coefficient indicating a correlation between exposure by the first plurality of antennas and exposure by the second plurality of antennas, a state of the first communication processor, and a state of the second communication processor;

set transmission limit power of each antenna of the first plurality of antennas based on the first allocated TER value; and

set transmit power of each antenna of the first plurality of antennas based on the transmission limit power.

Clause 10 The electronic device of clause 9, wherein the first communication processor is configured to:

store a mutual influence matrix indicating the correlation between the exposure by the first plurality of antennas and the exposure by the second plurality of antennas; and

set the coupling coefficient based on a plurality of correlation coefficients between an antenna in use among the first plurality of antennas and an antenna in use among the second plurality of antennas, the plurality of correlation coefficients being obtained from the mutual influence matrix.

Clause 11 The electronic device of clause 10, wherein the first communication processor is configured to:

set the coupling coefficient to 0 based on the plurality of correlation coefficients being all 0; and

set the coupling coefficient to 1 based on at least one correlation coefficient of the plurality of correlation coefficients not being 0.

Clause 12 The electronic device of any of clauses 9 to 11, wherein the first communication processor is configured to set a communication mode based on the coupling coefficient, the state of the first communication processor, and the state of the second communication processor, and to set the first allocated TER value based on the communication mode.

Clause 13 The electronic device of clause 12, wherein the first communication processor is configured to:

set the communication mode to a first communication mode based on the coupling coefficient being 1, the state of the first communication processor being an on state, and the state of the second communication processor being an off state;

set the communication mode to a second communication mode based on the coupling coefficient being 1, the state of the first communication processor being the on state, and the state of the second communication processor being an on state;

set the communication mode to a third communication mode based on the coupling coefficient being 1, the state of the first communication processor being an off state, and the state of the second communication processor being the on state;

set the communication mode temporarily to a fourth communication mode based on the coupling coefficient being 1 and the state of the first communication processor or the state of the second communication processor being changed;

set the communication mode to a fifth communication mode based on the coupling coefficient being 0; and

set the communication mode temporarily to a sixth communication mode based on the coupling coefficient being changed from 0 to 1.

Clause 14 The electronic device of clause 13, wherein the first communication processor is configured to:

set the first allocated TER value as a first TER value based on the communication mode being the first communication mode;

set the first allocated TER value as a second TER value that is lower than the first TER value based on the communication mode being the second communication mode, the third communication mode, or the fourth communication mode;

set the first allocated TER value to be higher than the first TER value based on the communication mode being the fifth communication mode; and

set the first allocated TER value to be lower than the second TER value based on the communication mode being the sixth communication mode.

Clause 15 The electronic device of clause 14, wherein the first communication processor is configured to:

set a second allocated TER value indicating a TER value allocated to the second transmitter based on the communication mode, and transmit the second allocated TER value to the second communication processor;

set the second allocated TER value as a third TER value based on the communication mode being the second communication mode or the third communication mode;

set the second allocated TER value as a fourth TER value that is lower than the third TER value based on the communication mode being the first communication mode or the fourth communication mode;

set the second allocated TER value to be higher than the third TER value based on the communication mode being the fifth communication mode; and

set the second allocated TER value to be lower than the fourth TER value based on the communication mode being the sixth communication mode.

## Claims

1. An electronic device comprising:

   a first plurality of antennas;
   a first transmitter configured to transmit a signal through at least one antenna of the first plurality of antennas;
   a first communication processor configured to set transmit power of the first transmitter;
   a second plurality of antennas;
   a second transmitter configured to transmit a signal through at least one antenna of the second plurality of antennas; and
   a second communication processor configured to set transmit power of the second transmitter, wherein the first communication processor is configured to:

      set a first allocated total exposure ratio (TER) value indicating a TER value allocated to the first transmitter based on a state of the first communication processor and a state of the second communication processor;
      set transmission limit power of each antenna of the first plurality of antennas based on the first allocated TER value; and
      set transmit power of each antenna of the first plurality of antennas based on the transmission limit power.

2. The electronic device of claim 1, comprising a main processor configured to control an overall operation of the electronic device,
   wherein the first communication processor is configured to receive the state of the second communication processor through the main processor.

3. The electronic device of claim 1 or 2, comprising an inner bus connecting the first communication processor with the second communication processor,

   wherein the inner bus is configured to transmit data between the first communication processor and the second communication processor, and
   wherein the first communication processor is configured to receive the state of the second communication processor through the inner bus.

4. The electronic device of any of claims 1 to 3, wherein the first communication processor is configured to set a communication mode based on the state of the first communication processor and the state of the second communication processor, and to set the first allocated TER value based on the communication mode.

5. The electronic device of claim 4, wherein the first communication processor is configured to:

   set the communication mode to a first communication mode based on the state of the first communication processor being an on state and the state of the second communication processor being an off state;
   set the communication mode to a second communication mode based on the state of the first communication processor being the on state and the state of the second communication processor being an on state;
   set the communication mode to a third communication mode based on the state of the first communication processor being an off state and the state of the second communication processor being the on state; and
   set the communication mode temporarily to a fourth communication mode based on the state of the first communication processor or the state of the second communication processor being changed.

6. The electronic device of claim 5, wherein the first communication processor is configured to:

   set the first allocated TER value as a first TER value based on the communication mode being the first communication mode; and
   set the first allocated TER value as a second TER value that is lower than the first TER value based on the communication mode being the second communication mode, the third communication mode, or the fourth communication mode.

7. The electronic device of claim 5 or 6, wherein the first communication processor is configured to:

   set a second allocated TER value indicating a TER value allocated to the second transmitter based on the communication mode, and transmit the second allocated TER value to the second communication processor;
   set the second allocated TER value as a third TER value based on the communication mode being the second communication mode or the third communication mode; and

set the second allocated TER value as a fourth TER value that is lower than the third TER value based on the communication mode being the first communication mode or the fourth communication mode.

8. The electronic device of any of claims 1 to 7, wherein the first communication processor is configured to:

set a limit TER value of each antenna of the first plurality of antennas based on the first allocated TER value and a first influence matrix indicating a correlation between a plurality of exposures by the first plurality of antennas; and

set the transmission limit power based on the limit TER value.

9. The electronic device of claim 1, wherein the first communication processor is further configured to: set the first allocated total exposure ratio (TER) value indicating the TER value allocated to the first transmitter based on a coupling coefficient indicating a correlation between exposure by the first plurality of antennas and exposure by the second plurality of antennas, the state of the first communication processor, and the state of the second communication processor.

10. The electronic device of claim 9, wherein the first communication processor is configured to:

store a mutual influence matrix indicating the correlation between the exposure by the first plurality of antennas and the exposure by the second plurality of antennas; and

set the coupling coefficient based on a plurality of correlation coefficients between an antenna in use among the first plurality of antennas and an antenna in use among the second plurality of antennas, the plurality of correlation coefficients being obtained from the mutual influence matrix.

11. The electronic device of claim 10, wherein the first communication processor is configured to:

set the coupling coefficient to 0 based on the plurality of correlation coefficients being all 0; and

set the coupling coefficient to 1 based on at least one correlation coefficient of the plurality of correlation coefficients not being 0.

12. The electronic device of any of claims 9 to 11, wherein the first communication processor is configured to set a communication mode based on the coupling coefficient, the state of the first communication processor, and the state of the second communication processor, and to set the first allocated TER value based on the communication mode.

13. The electronic device of claim 12, wherein the first communication processor is configured to:

set the communication mode to a first communication mode based on the coupling coefficient being 1, the state of the first communication processor being an on state, and the state of the second communication processor being an off state;

set the communication mode to a second communication mode based on the coupling coefficient being 1, the state of the first communication processor being the on state, and the state of the second communication processor being an on state;

set the communication mode to a third communication mode based on the coupling coefficient being 1, the state of the first communication processor being an off state, and the state of the second communication processor being the on state;

set the communication mode temporarily to a fourth communication mode based on the coupling coefficient being 1 and the state of the first communication processor or the state of the second communication processor being changed;

set the communication mode to a fifth communication mode based on the coupling coefficient being 0; and

set the communication mode temporarily to a sixth communication mode based on the coupling coefficient being changed from 0 to 1.

14. The electronic device of claim 13, wherein the first communication processor is configured to:

set the first allocated TER value as a first TER value based on the communication mode being the first communication mode;

set the first allocated TER value as a second TER value that is lower than the first TER value based on the communication mode being the second communication mode, the third communication mode, or the fourth communication mode;

set the first allocated TER value to be higher than the first TER value based on the communication mode being the fifth communication mode; and

set the first allocated TER value to be lower than the second TER value based on the communication mode being the sixth communication mode.

**15.** The electronic device of claim 14, wherein the first communication processor is configured to:

set a second allocated TER value indicating a TER value allocated to the second transmitter based on the communication mode, and transmit the second allocated TER value to the second communication processor;

set the second allocated TER value as a third TER value based on the communication mode being the second communication mode or the third communication mode;

set the second allocated TER value as a fourth TER value that is lower than the third TER value based on the communication mode being the first communication mode or the fourth communication mode;

set the second allocated TER value to be higher than the third TER value based on the communication mode being the fifth communication mode; and

set the second allocated TER value to be lower than the fourth TER value based on the communication mode being the sixth communication mode.

# FIG. 1

1

30

10

40

20

# FIG. 2

EP 4 468 794 A1

# FIG. 3

POWER [dBm]

TER MEASUREMENT INTERVAL

Pmax

Plimit

Pused(m+1)

Pused(m)

$\cdots$     m−1    m    m+1    m+2    $\cdots$    m+M−1  m+M    TIME[sec]

SETTING TARGET WINDOW

EP 4 468 794 A1

# FIG. 4

FIRST COMMUNICATION PROCESSOR — 230

CONTROLLER — 231

INFLUENCE MATRIX MEMORY — 232

ANTENNA INDEX BUFFER — 233

USED POWER BUFFER — 234

# FIG. 5

# FIG. 6

| COMMUNICATION MODE | FIRST ALLOCATED TER VALUE | SECOND ALLOCATED TER VALUE |
|---|---|---|
| FIRST COMMUNICATION MODE | TER1 | TER4 |
| SECOND COMMUNICATION MODE | TER2 | TER3 |
| THIRD COMMUNICATION MODE | TER2 | TER3 |
| FOURTH COMMUNICATION MODE | TER2 | TER4 |
| TER1>TER2, TER3>TER4 | | |

# FIG. 7

**FIRST COMMUNICATION MODE**

FIRST COMMUNICATION
PROCESSOR: ON
SECOND COMMUNICATION
PROCESSOR: OFF
COUPLING COEFFICIENT: 1

**SECOND COMMUNICATION MODE**

FIRST COMMUNICATION
PROCESSOR: ON
SECOND COMMUNICATION
PROCESSOR: ON
COUPLING COEFFICIENT: 1

SECOND COMMUNICATION
PROCESSOR ON / OFF

**FOURTH COMMUNICATION MODE**

STATE OF FIRST OR SECOND
COMMUNICATION PROCESSOR
BEING CHANGED
COUPLING COEFFICIENT: 1

FIRST COMMUNICATION
PROCESSOR ON / OFF

COUPLING
COEFFICIENT 0→1

**SIXTH COMMUNICATION MODE**

COUPLING COEFFICIENT
BEING CHANGED

**THIRD COMMUNICATION MODE**

FIRST COMMUNICATION
PROCESSOR: OFF
SECOND COMMUNICATION
PROCESSOR: ON
COUPLING COEFFICIENT: 1

COUPLING
COEFFICIENT 1→0

COUPLING
COEFFICIENT 0→1

**FIFTH COMMUNICATION MODE**

COUPLING COEFFICIENT: 0

EP 4 468 794 A1

# FIG. 8

| COMMUNICATION MODE | FIRST ALLOCATED TER VALUE | SECOND ALLOCATED TER VALUE |
|---|---|---|
| FIRST COMMUNICATION MODE | TER1 | TER4 |
| SECOND COMMUNICATION MODE | TER2 | TER3 |
| THIRD COMMUNICATION MODE | TER2 | TER3 |
| FOURTH COMMUNICATION MODE | TER2 | TER4 |
| FIFTH COMMUNICATION MODE | TER5 | TER7 |
| SIXTH COMMUNICATION MODE | TER6 | TER8 |
| TER5>TER1>TER2>TER6, TER7>TER3>TER4>TER8 | | |

# FIG. 9

| USED POWER BUFFER | Pused(m−1) | Pused(m) | Pused(m+1) | · · · | Pused(m+M−2) | Pused(m+M−1) | 234 |
|---|---|---|---|---|---|---|---|

| ANT. IDX. BUFFER | AntIdx(m−1) | AntIdx(m) | AntIdx(m+1) | · · · | AntIdx(m+M−2) | AntIdx(m+M−1) | 233 |
|---|---|---|---|---|---|---|---|

TER MEASUREMENT INTERVAL

# FIG. 10

```
                    ┌─────────┐
                    │  START  │
                    └────┬────┘
                         │
                         ▼
     ┌──────────────────────────────────────┐
     │ RECEIVE STATE OF SECOND COMMUNICATION │──── S1010
     │              PROCESSOR                │
     └────────────────┬─────────────────────┘
                      │
                      ▼
     ┌──────────────────────────────────────┐
     │ SET FIRST ALLOCATED TER VALUE AND     │
     │ SECOND ALLOCATED TER VALUE BASED ON   │──── S1020
     │ STATE OF FIRST COMMUNICATION          │
     │ PROCESSOR AND STATE OF SECOND         │
     │ COMMUNICATION PROCESSOR               │
     └────────────────┬─────────────────────┘
                      │
                      ▼
     ┌──────────────────────────────────────┐
     │ SET TRANSMISSION LIMIT POWER OF EACH  │
     │ OF ANTENNAS INCLUDED IN FIRST ANTENNA │──── S1030
     │ MODULE BASED ON FIRST ALLOCATED TER   │
     │ VALUE                                 │
     └────────────────┬─────────────────────┘
                      │
                      ▼
     ┌──────────────────────────────────────┐
     │ SET TRANSMIT POWER OF EACH OF         │
     │ ANTENNAS INCLUDED IN FIRST ANTENNA    │──── S1040
     │ MODULE BASED ON THE TRANSMISSION      │
     │ LIMIT POWER                           │
     └────────────────┬─────────────────────┘
                      │
                      ▼
                 ┌─────────┐
                 │   END   │
                 └─────────┘
```

# FIG. 11

S1010

↓

SET COMMUNICATION MODE BASED ON STATE OF
FIRST COMMUNICATION PROCESSOR AND STATE
OF SECOND COMMUNICATION PROCESSOR — S1110

↓

SET FIRST ALLOCATED TER VALUE AND SECOND
ALLOCATED TER VALUE BASED ON COMMUNICATION
MODE — S1120

↓

S1030

# FIG. 12

S1020

CALCULATE LIMIT TER VALUE OF EACH OF ANTENNAS INCLUDED IN FIRST ANTENNA MODULE BASED ON FIRST INFLUENCE MATRIX AND FIRST ALLOCATED TER VALUE — S1210

SET TRANSMISSION LIMIT POWER OF EACH OF ANTENNAS INCLUDED IN FIRST ANTENNA MODULE BASED ON LIMIT TER VALUE — S1220

S1040

FIG. 13

| | Europäisches Patentamt European Patent Office Office européen des brevets | **EUROPEAN SEARCH REPORT** | Application Number EP 24 17 5860 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/185620 A1 (JADHAV DIGVIJAY ARJUNRAO [US] ET AL) 17 June 2021 (2021-06-17) * paragraphs [0050] - [0055]; figures 11-13 * * paragraphs [0030] - [0049] * | 1-15 | INV. H04W52/36 H04W52/38 |
| A | US 2017/111947 A1 (LIU HSIN-YOU [US] ET AL) 20 April 2017 (2017-04-20) * paragraphs [0025] - [0034] * * paragraphs [0035] - [0039] * | 1-15 | |
| A | US 2022/159584 A1 (CHA JAEMOON [KR] ET AL) 19 May 2022 (2022-05-19) * paragraphs [0100] - [0127] * | 1-15 | |

TECHNICAL FIELDS
SEARCHED     (IPC)

H04W

The present search report has been drawn up for all claims

| Place of search | Date of completion of the search | Examiner |
|---|---|---|
| The Hague | 30 September 2024 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5860

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | | | Publication date |
|---|---|---|---|---|---|---|
| US 2021185620 | A1 | 17-06-2021 | CN | 112740769 | A | 30-04-2021 |
| | | | DE | 112019004885 | T5 | 10-06-2021 |
| | | | US | 2020107274 | A1 | 02-04-2020 |
| | | | US | 2021185620 | A1 | 17-06-2021 |
| | | | WO | 2020068357 | A1 | 02-04-2020 |
| US 2017111947 | A1 | 20-04-2017 | CN | 106253938 | A | 21-12-2016 |
| | | | DE | 102016209894 | A1 | 08-12-2016 |
| | | | US | 2016360564 | A1 | 08-12-2016 |
| | | | US | 2017111947 | A1 | 20-04-2017 |
| US 2022159584 | A1 | 19-05-2022 | BR | 112022002512 | A2 | 03-05-2022 |
| | | | CN | 112399535 | A | 23-02-2021 |
| | | | CN | 118042565 | A | 14-05-2024 |
| | | | EP | 3780400 | A1 | 17-02-2021 |
| | | | KR | 20210020462 | A | 24-02-2021 |
| | | | US | 2021051601 | A1 | 18-02-2021 |
| | | | US | 2022132438 | A1 | 28-04-2022 |
| | | | US | 2022159584 | A1 | 19-05-2022 |
| | | | US | 2024089867 | A1 | 14-03-2024 |
| | | | WO | 2021029692 | A1 | 18-02-2021 |
| | | | ZA | 202202736 | B | 20-12-2023 |

EPO FORM P0459

For more details about this annex : see Official Journal of the European Patent Office, No. 12/82